# EUROPEAN PATENT SPECIFICATION

(11) **EP 2 774 775 B1**
(45) Date of publication and mention of the grant of the patent: **30.09.2015**
(21) Application number: 13199415.4
(22) Date of filing: 23.12.2013
(51) Int. Cl.: B42D 25/00, G06K 19/077

(54) **A method of manufacturing an electronic identity document**
Verfahren zur Herstellung eines elektronischen Identitätsdokuments
Procédé de fabrication d'un document d'identité électronique

(30) Priority: 04.01.2013 IT RM20130005
(43) Date of publication of application: 10.09.2014
(73) Proprietor: Istituto Poligrafico e Zecca dello Stato S.p.A., 00138 Roma (RM) (IT)
(72) Inventor: Ghisa, Giuseppe, 00138 Rome (IT); Luciani, Laura, 00138 Rome (IT)
(74) Representative: Papa, Elisabetta

(56) References cited:
- EP-A1- 1 139 302
- WO-A1-2012/082609
- US-A1- 2004 134 994
- US-A1- 2012 155 700

## Description

### Technical field of the invention

The present invention relates to a method of manufacturing an identification document of electronic type, that is a document incorporating even a storage means bearing identification data in electronic format. Such storage means typically is a microprocessor of "contactless" type, for example a rfid chip.

The method can be applied in particular to the manufacturing of documents such as driving licences, identity cards, passports, residence permits and other, both in so-called "card" format (in particular in ID1, ISO/IEC 7810:2003 format) and in the form of a booklet (in particular in ID3, ISO/IEC 7810:2003 format).

### Background

In the known art, the identification electronic documents of the above-mentioned type are manufactured through two clearly distinct, and in general even timely distant, productive steps.

In particular, in a first set the physical data medium of the document is manufactured and the microprocessor is incorporated therein. In case of a multi-layer "card", the microprocessor is inserted in the multi-layer structure of the "card" itself, whereas in case of an electronic passport in the form of a booklet the microprocessor can be inserted in the body of an intermediate data page or in the cover.

This first step typically provides a process of "massive" production of half-finished documents which can be of two types, that is: "anonymous", and therefore wholly without identifying data (case A); or partially customized, for example bearing on the physical medium the photo of the owner and a reference code, for example the identifying number of the document (case B).

In the first case (case A), the "anonymous" half-finished documents are picked-up from the store in the needed quantity and one proceeds with the customization thereof. Such customization step consists in storing information identifying the owner, and possible additional information, in the microprocessor (electronic customization) and in the affixing onto the medium, generally in graphic form, of said identifying information (physical customization). Such affixing of information in physical form can be performed by means of different techniques, for example by means of colour or white/black printers, by means of laser technology or other. The above-mentioned electronic and graphic customizations are performed in sequence on the forming document. Furthermore, the physical customization, in turn, can provide a plurality of working steps in sequence, in particular for affixing different graphic elements, for example writings, security elements in form of holograms or other, photos and so on. As already said, this second step is wholly separated from the first step of massive production of half-finished and not customized documents.

In the second case (case B), the pre-customization of the physical medium generally provides the colour printing (with visible or invisible inks) of reference codes to be used for a subsequent association of data on the electronic storage means.

The pre-customized physical medium, assembled and rolled with the electronic elements, allows manufacturing documents which are defined "partially customized half-finished documents". In a second step, the partially customized half-finished documents are guided to the whole customization. Reading and identifying the reference code existing on the physical medium allows to store the corresponding information identifying the owner, and possible other additional information, in the microprocessor (electronic customization), and possible writing of additional identifying data on the physical medium (additional physical customization).

A method for implementing a photo inside the multi-layer body of a plastic document is described in WO 2011/020537 A1.

The above-mentioned modes of known art for manufacturing electronic documents have two important drawbacks:
In the first case mentioned above (case A), the fact that in the first step anonymous documents, destined to the storage, are manufactured makes necessary a strict control of produced stocks. This to avoid the stealing of "anonymous" documents, the fraudulent customization thereof out of the legal issuing circuit and therefore the implementation of counterfeit documents.
Furthermore, in both cases considered above (case A and case B), since the steps of "electronic" customization of the microprocessor and the "physical" one of the medium are implemented according to sequential modes, extremely reliable process logics and repeated controls are made necessary, in order to avoid episodes of "*mismatching*" data, that is the issue of wrong documents (for example the association of a photo with not corresponding electronic identifying data).

US 2012/155700 describes an electronic document equipped with "auto-authentication" properties. The document at first is supplied in form of "blank" rolled section bearing a pair of circuits for storing and transferring information, in particular *tags RFID.* A predetermined piece of information in text format is printed on the medium and stored in one of the two *tags.* In the other *tag,* instead, an image of the same document is stored.

Therefore, in US 2012/155700 the data writing takes place when the physical medium and the electronic one are already assembled one with the other one.

US 2004/0134994 describes a security document comprising a medium in form of sheet thereon a storage *tag* is applied. Even in this case, the information writing on the physical medium and on the electronic one takes place once the latter have been assembled one with the other one.

EP 1 139 302 describes a method for manufacturing a sheet bearing a chip. The pieces of information firstly are stored in the chip, then printed on the physical medium implementing the sheet and then chip and sheet are assembled. Therefore, a simultaneous writing is not provided.

### Summary of the invention

The technical problem placed and solved by the present invention is then to provide a method of manufacturing an electronic document, for example in "card" format or in the form of a booklet, allowing to obviate the drawbacks mentioned above with reference to the known art.

Such problem is solved by a method according to claim 1.

Preferred features of the invention are object of the depending claims.

As said above, in the present context under "electronic document" a document is meant formed by a physical medium, for example a data sheet, bearing identification information in physical form, in particular graphic form, and by storage means bearing identification information in electronic format.

One of the main advantages of the present invention is that it allows minimizing the risk of issuing counterfeit documents after stealing "anonymous" half-finished documents which have been produced legitimately. This is obtained mainly thanks to the fact that the customization of the physical medium and of the electronic storage means- typically a microprocessor - takes place in a step immediately preceding the assembling thereof, that is according to an opposite operating sequence with respect to the known art one described above. In this way, half-finished (blank) documents, which can be stolen for a subsequent customization outside the legal issuing circuit, are not made available.

Furthermore, in the invention method the identification data to be embedded in the document are provided parallelly to means for writing on the physical medium and to means for writing on the electronic storage means. Therefore, each risk of "mismatching" data is avoided.

Still, the fact that the electronic storage means and the physical medium are assembled after the respective customization operations allows writing the identification information in the physical medium in an arrangement well protected inside the document, that is even in the innermost layers and not on the outest surface. In this way, the anti-counterfeit security properties of the end document will result to be increased.

An additional advantage of the present invention is the decrease in costs due to the manufacturing waste, as the document manufacturing is downstream of the step of checking the customized elements.

Other advantages, features and use modes of the present invention will result evident from the following detailed description of some embodiments, shown by way of example and not with limitative purposes.

### Brief description of the drawings

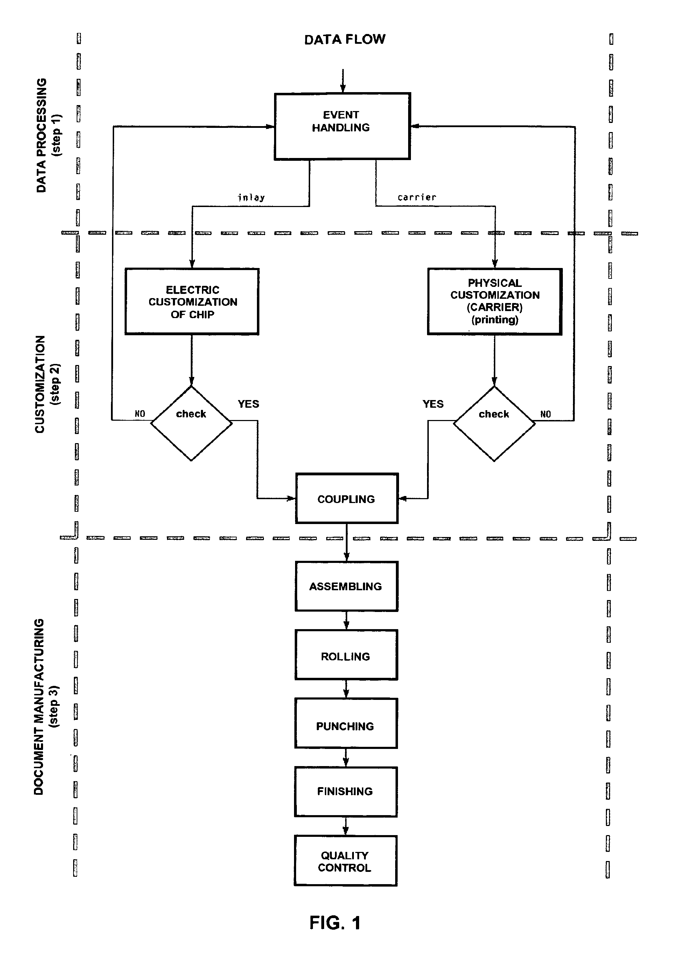

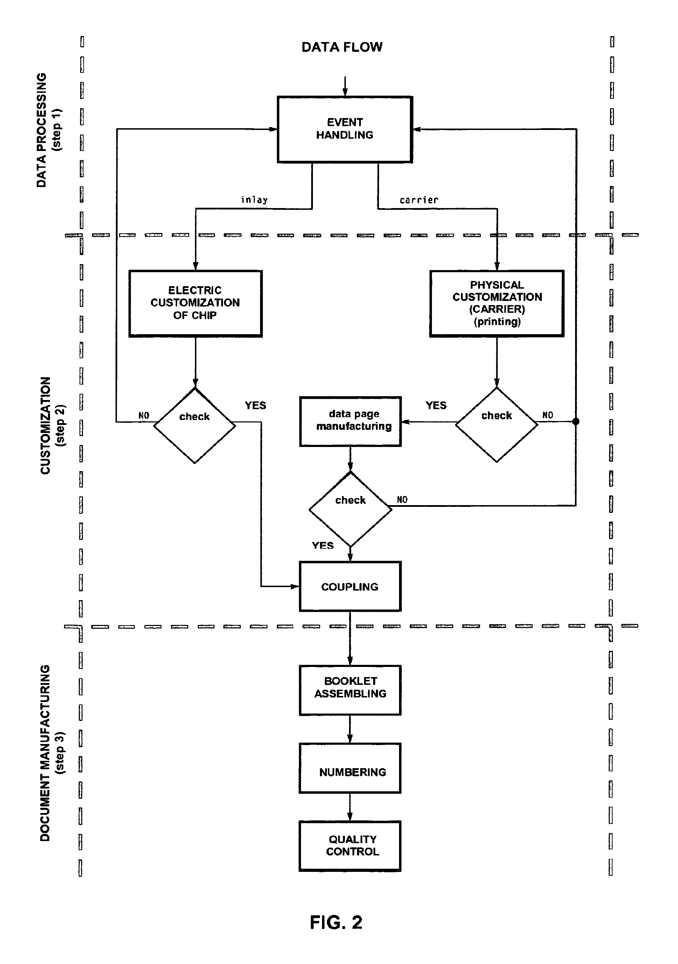

The figures of the enclosed drawings will be referred to, wherein:
■ Figure 1 shows a flow chart related to a first preferred embodiment of the method of the present invention; and
■ Figure 2 shows a flow chart related to a second preferred embodiment of the method of the present invention.

### Detailed description of preferred embodiments

Figure 1 shows an exemplifying flow diagram relating to a first embodiment of the method of manufacturing an electronic document according to the present invention.

The method of Figure 1 allows manufacturing an identity document made of multi-layer plastic material, such as for example an identity card or an identification card.

In the present example, the method is meant for manufacturing an electronic document in so-called "card" format. The latter is formed by a main body, or physical medium, in form of a multi-layer structure, thereon/therein electronic storage means, typically a microprocessor, or chip, preferably of wireless type, in particular of rfid type, is embedded. The multi-layer body bears identification data in physical form, and in particular graphic form, for example writings and/or photos. The microprocessor bears the same and/or additional identification data in electronic form.

The multi-layer body for example can be made of one or more of the following materials: PVC, polyester, polycarbonate or other.

As shown in Figure 1, the method provides a first step wherein the identification data are provided in form of a *"data flow"* to a *"event-managing"* unit. In the present example such identification data comes from an issuing circuit and in particular they relate to the document owner. In the *"event-managing"* unit such data are:
- put in order by - that is associated to - each document which is being manufactured;
- processed with the purpose of reducing them to the format necessary to perform a physical writing and an electronic writing of the physical medium and of the microprocessor, respectively; and/or
- associated to additional possible information.

In Figure 1 this step is wholly identified as *"data processing".*

From such step, the identification data are carried simultaneously - or however in almost such logic sequence - to first means for writing the same data - in the above-mentioned graphic form - on the physical medium and to second means for writing the data themselves - in electronic format - on the microprocessor. In the chart of Figure 1, the physical medium is called *"carrier"* and the substrate bearing the microprocessor for the electronic data is called *"inlay".*

In a second step, defined *"customization"* in Figure 1, the above-mentioned procedures of data writing are indeed performed.

The writing on the physical medium can provide one or more printing procedures (*"printing"* in Figure 1), performed with any technique.

The correct execution of the graphic and electronic writing is checked by means of a respective control procedure for the physical medium and for the microprocessor. In case such check gives negative result, the method starts again from the above-mentioned step of *"data processing"* for the physical medium, for the microprocessor or both of them.

In case of positive result of the two above-mentioned checks, at the end of the *"customization"* step the physical medium and the microprocessor are coupled, that is assembled together in a predetermined mutual arrangement. Therefore, any possible *"mismatching"* of the information related to the owner of the document which is being manufactured is avoided.

In a third preferred step of the herein considered method, the manufacturing of the document can be completed by means of one or more of the following procedures: assembling with additional layers of the "card" and rolling. In Figure 1, such additional step is defined as *"document manufacturing"* and it provides, in combination, all above-mentioned procedures.

Such step can even provide the assembling with carriers containing security graphic elements, affixing of anti-counterfeiting holographic elements and/or protective elements or other procedures according to the known art.

Figure 2 shows an exemplifying flow diagram relating to a second embodiment of the method according to the present invention.

In the example of Figure 2, the method is meant for manufacturing an electronic document in the form of a booklet, such as for example an electronic passport. The latter is formed by a main body indeed in form of a booklet or multi-page structure. In one of the pages, and in particular in an intermediate page or in the cover, electronic storage means, typically a microprocessor, or chip, even in this case preferably of wireless type, in particular of rfid type, is embedded. At least one of the pages of the booklet bears identification data in physical form, for example graphic form, for example writings and/or photos. Typically, the page of the booklet bearing the data in physical form is in plastic format, in particular in polycarbonate. The microprocessor bears the same and/or additional identification data in electronic form.

In the present example, it is provided that the booklet page bearing the above-mentioned physical data, and in particular the graphic data, that is the physical medium, is further meant to embed the microprocessor. Such page typically is manufactured in the form of a multi-layer structure, preferably (at least mainly) in polycarbonate.

The steps of the here-considered method of Figure 2 will be now described only by referring to the portions differing or integrating what described above in relation to the first embodiment illustrated in Figure 1.

In the *"customization"* step (step 2 of Figure 2), in case of positive result of the check related to the physical medium (booklet's page of data) the latter is completed by means of rolling procedures or other *("data page manufacturing"* procedure of Figure 2).

Downstream of such procedure, the so-obtained data page is subjected to an additional checking step. In case of negative result, one goes back to the step 1 of *"data processing".* In the positive case, one proceeds with the coupling with the microprocessor, that is with the assembling of such elements.

Based upon an embodiment variant, the microprocessor and the data page bearing the physical data can be not associated in the same document page. In such case the *"coupling"* procedure of Figure 2 will be meant as assembling the microprocessor and the data sheet in a same document.

Even in case of the embodiment of Figure 2, a third step of *"document manufacturing"* is preferably provided, based upon one or more of the following procedures: booklet assembling, numbering of the related pages and quality control. In Figure 2, such additional step, in combination, provides all above-mentioned procedures.

The invention method has been sofar described with reference to the embodiments wherein a single physical medium and a single storage means are provided. In a particularly advantageous variant the use of a first matrix is provided, bearing a plurality of physical media and a second matrix bearing a corresponding plurality of respective storage means. Such two matrixes can be designated as "data sheet" and "inlay sheet", respectively.

In such case, in the *"event-management"* unit of the *"data processing"* unit of Figure 1 and 2, the inletting flow data are:
- put in order by - that is associated to - each element of the data sheet and of the inlay sheet;
- processed with the purpose of reducing them to the format necessary to perform a physical writing and an electronic writing of the data sheet and of the inlay sheet, respectively; and/or
- associated to additional possible information.

From such step, in the *"customization"* step the identification data are carried simultaneously - or however in almost such logical sequence - to a plurality of first means for writing the same data on the physical media of the data sheet and to a corresponding plurality of second means for writing the same data - in electronic format - on microprocessors of the inlay sheet. Means for writing such double plurality is suitable to operate in parallel, by performing a simultaneous writing of the data. Such simultaneousness - or substantial simultaneousness - is to be meant in the sense that the writing takes place simultaneously, or substantially simultaneously, on storage means and on the respective physical medium. Such simultaneousness - or substantial simultaneousness - preferably also involves a simultaneous, or substantially simultaneous, writing on all storage means of the inlay sheet and a corresponding simultaneous, or substantially simultaneous, writing on all physical media of the data sheet.

The other steps of the above described method with reference to the Figures 1 and 2 are correspondingly adapted to the management of the two above-illustrated matrixes.

In the herein considered variant, the *"coupling"* step of Figures 1 and 2 provides to bring into register the data sheet and the inlay sheet, a superimposition thereof indeed by register and a real joining step, typically by means of rolling.

A subsequent step then provides a punching for obtaining the single documents.

The present invention has been sofar described with reference to preferred embodiments. It is to be meant that other embodiments may exist, all belonging to the same inventive core, as defined by the protection scope of the claims reported here below.

## Claims

1. A method of manufacturing an electronic document, the latter of the type comprising a physical medium bearing identification data in a physical form, in particular graphic form, and storage means bearing the same and/or further identification data in electronic format, which method comprises the steps of:
(a) providing separately a physical medium and storage means, both to be customized with identification data;
(b) providing identification data to be associated with a same document;
(c) providing simultaneously said identification data to first means for writing said identification data in physical form upon said medium and to second means for writing said identification data in electronic format on said storage means;
(d) performing said data writing upon said physical medium and on said storage means; and
(e) assembling said medium bearing identification data in physical form with said storage means bearing identification data in electronic format.

2. The method according to claim 1, comprising, downstream of said step (e), further steps of processing and/or assembling the document.

3. The method according to claim 1 or 2, wherein the document is in card format and wherein said physical medium is preferably in the form of a multi-layer structure.

4. The method according to claim 1 or 2, wherein said document is in the form of a booklet.

5. The method according to the preceding claim, wherein said storage means is embedded in a cover page of said booklet.

6. The method according to claim 4 or 5, wherein said physical medium makes a page, in particular an intermediate page, of said booklet.

7. The method according to anyone of the preceding claims, wherein, in said step (e), said electronic storage means is directly coupled with said physical medium.

8. The method according to anyone of the preceding claims, wherein said electronic storage means is a microprocessor, preferably of RFID type.

9. The method according to anyone of the preceding claims, wherein said step (d) provides the use of a first plurality of first writing means and of a second plurality of second writing means, the writing means of said first and second plurality operating substantially simultaneously on a respective plurality of media and storage means.

10. The method according to anyone of the preceding claims, wherein said step (a) provides:
- a first matrix of physical media, wherein each medium of the matrix corresponds to a respective document; and
- a second matrix of storage media, in particular in the form of an inlay sheet, wherein each storage means of the matrix corresponds to a respective document,
each physical medium of said first matrix corresponding to a respective storage means and vice versa.

11. The method according to the preceding claim, wherein said step (d) provides a substantially simultaneous writing of respective identification data on the physical media of the first matrix on the storage means of the second matrix.

## Patentansprüche

1. Verfahren zur Herstellung eines elektronischen Dokuments, wobei das elektronische Dokument umfasst: ein physisches Medium, das Identifizierungsdaten in einer physischen Form trägt, im Besonderen in einer graphischen Form, und Speichermittel, die die selben und/oder weitere Identifizierungsdaten in einem elektronischen Format tragen, wobei das Verfahren die folgenden Schritte umfasst:
(a) getrennte Bereitstellung eines physischen Mediums und eines Speichermittels, beide zur Ausstattung mit Identifizierungsdaten;
(b) Bereitstellung von Identifizierungsdaten zur Verknüpfung mit einem selben Dokument;
(c) gleichzeitige Bereitstellung der Identifizierungsdaten an ein erstes Mittel zum Schreiben der Identifizierungsdaten in physischer Form in das Medium und an ein zweites Mittel zum Schreiben der Identifizierungsdaten in einem elektronischen Format in das Speichermittel;
(d) Durchführung des Datenschreibens in das physische Medium und in das Speichermittel; und
(e) Zusammenbau des Mediums, das Identifizierungsdaten in physischer Form trägt, mit dem Speichermittel, das Identifizierungsdaten in einem elektronischen Format trägt.

2. Verfahren gemäß Anspruch 1, das, dem Schritt (e) nachfolgend, weitere Schritte zur Verarbeitung und/oder zum Zusammenstellen des Dokuments umfasst.

3. Verfahren gemäß Anspruch 1 oder 2, wobei das Dokument in einem Kartenformat vorliegt und wobei das physische Medium vorzugsweise in der Form einer Mehrschichtstruktur vorliegt.

4. Verfahren gemäß Anspruch 1 oder 2, wobei das Dokument in der Form eines Heftes vorliegt.

5. Verfahren gemäß dem vorangehenden Anspruch, wobei das Speichermittel in einer Titelseite des Heftes eingebettet ist.

6. Verfahren gemäß Anspruch 4 oder 5, wobei das physische Medium eine Seite, im Besonderen eine Zwischenseite, des Heftes ausmacht.

7. Verfahren gemäß einem der vorangehenden Ansprüche, wobei in dem Schritt (e) das elektronische Speichermittel direkt an das physische Medium gekoppelt wird.

8. Verfahren gemäß einem der vorangehenden Ansprüche, wobei das elektronische Speichermittel ein Mikroprozessor, vorzugsweise vom RFID-Typ, ist.

9. Verfahren gemäß einem der vorangehenden Ansprüche, wobei der Schritt (d) die Verwendung einer ersten Mehrzahl von ersten Schreibmitteln und einer zweiten Mehrzahl von zweiten Schreibmitteln zur Verfügung stellt, wobei die Schreibmittel der ersten und zweiten Mehrzahl im Wesentlichen gleichzeitig auf einer entsprechenden Mehrzahl von Medien und Speichermitteln arbeiten.

10. Verfahren gemäß einem der vorangehenden Ansprüche, wobei der Schritt (a) folgendes zur Verfügung stellt:
- eine erste Matrix von physischen Medien, wobei jedes Medium der Matrix einem entsprechenden Dokument entspricht; und
- eine zweite Matrix von Speichermedien, im Besonderen in der Form eines Einlegeblechs, wobei jedes Speichermittel der Matrix einem entsprechenden Dokument entspricht,
wobei jedes physische Medium der ersten Matrix einem entsprechenden Speichermittel entspricht und umgekehrt.

11. Verfahren gemäß einem der vorangehenden Ansprüche, wobei der Schritt (d) ein im Wesentlichen gleichzeitiges Schreiben entsprechender Identifizierungsdaten in das physische Medium der ersten Matrix und in das Speichermittel der zweiten Matrix zur Verfügung stellt.

## Revendications

1. Procédé de fabrication de document électronique, ce dernier étant du type comportant un support physique portant des données d'identification sous une forme physique, sous une forme graphique particulière, et un moyen de stockage contenant celles-ci et/ou d'autres données d'identification sous format électronique, lequel procédé comportant les étapes de :
(a) création séparée d'un support physique et d'un moyen de stockage, tous deux à adapter spécifiquement aux données d'identification ;
(b) création de données d'identification à associer à un même document ;
(c) fourniture simultanée desdites données d'identification à un premier moyen pour inscrire lesdites données d'identification sous une forme physique sur ledit support et à un second moyen pour inscrire lesdites données d'identification sous une forme numérique dans ledit moyen de stockage ;
(d) réalisation de ladite inscription de données sur ledit support physique et sur ledit moyen de stockage ; et
(e) assemblage dudit support portant des données d'identification sous une forme physique avec ledit moyen de stockage contenant des données d'identification sous format électronique.

2. Procédé selon la revendication 1, comportant, après ladite étape (e), d'autres étapes consistant à traiter et/ou assembler le document.

3. Procédé selon la revendication 1 ou 2, dans lequel le document est sous la forme d'une carte et dans lequel ledit support physique est de préférence sous la forme d'une structure multicouche.

4. Procédé selon la revendication 1 ou 2, dans lequel ledit document est sous la forme d'un livret.

5. Procédé selon la revendication précédente, dans lequel ledit moyen de stockage est incrusté dans une page de couverture dudit livret.

6. Procédé selon la revendication 4 ou 5, dans lequel ledit support physique constitue une page, en particulier une page intermédiaire, dudit livret.

7. Procédé selon l'une quelconque des revendications précédentes, dans lequel, lors de ladite étape (e), ledit moyen électronique de stockage est directement couplé audit support physique.

8. Procédé selon l'une quelconque des revendications précédentes, dans lequel ledit moyen électronique de stockage est un microprocesseur, de préférence de type RFID.

9. Procédé selon l'une quelconque des revendications précédentes, dans lequel ladite étape (d) permet l'utilisation d'une première pluralité de premiers moyens d'inscription et d'une seconde pluralité de second moyens d'inscription, les moyens d'inscription desdites première et seconde pluralités fonctionnant sensiblement simultanément sur une pluralité respective de supports et de moyens de stockage.

10. Procédé selon l'une quelconque des revendications précédentes, dans lequel ladite étape (a) crée :
- une première matrice de supports physiques, chaque support de la matrice correspondant à un document respectif ; et
- une seconde matrice de supports de stockage, en particulier sous la forme d'une feuille insérée, chaque moyen de stockage de la matrice correspondant à un document respectif,
chaque support physique de ladite première matrice correspondant à un moyen de stockage respectif et inversement.

11. Procédé selon la revendication précédente, dans lequel ladite étape (d) réalise une inscription sensiblement simultanée, sur le moyen de stockage de la seconde matrice, de données d'identification respectives présentes sur le support physique de la première matrice.
